# EUROPÄISCHE PATENTSCHRIFT

(11) **EP 2 469 622 B1**
(45) Veröffentlichungstag und Bekanntmachung des Hinweises auf die Patenterteilung: **24.07.2013**
(21) Anmeldenummer: 10016030.8
(22) Anmeldetag: 23.12.2010
(51) Int. Cl.: H01M 10/48, H01M 2/20, H01M 2/10, H01M 10/42

(54) **Schwenkbare Verbindung von Batterien**
Pivotating connection for batteries
Liaison pivotante de batteries

(43) Veröffentlichungstag der Anmeldung: 27.06.2012
(73) Patentinhaber: OUTILS WOLF, 67165 Wissembourg Cedex (FR)
(72) Erfinder:
(74) Vertreter: Lemcke, Brommer & Partner

(56) Entgegenhaltungen:
- DE-A1- 10 122 682
- DE-U1- 29 824 609
- JP-A- 11 073 939

## Beschreibung

Die Erfindung betrifft eine Batterie, die zur Versorgung elektrischer Geräte unterschiedlichen Leistungsbedarfes mit mehreren gleichartigen Batterien lösbar verbindbar ist, wobei die Batterie zumindest vier Anschlusspole aufweist, von denen jeweils zwei Anschlusspole mit zwei entsprechend positionierten komplementären Anschlusspolen einer benachbarten Batterie korrespondieren.

Der Begriff "Batterie" wird in der vorliegenden Beschreibung für die Gesamtheit der Strom erzeugenden elektrochemischen Zellen zusammen mit ihrem Gehäuse verstanden. Dabei kann das Gehäuse unlösbar mit der oder den im Gehäuseinneren angeordneten elektrochemischen Zelle(n) verbunden sein. Gleicherma-βen kann es sich aber auch um ein eigenständiges Gehäuse handeln, in welchem die elektrochemische(n) Zelle(n) gegebenenfalls entnehmbar untergebracht ist bzw. sind. Demgemäß wird im Folgenden auch dann der Begriff "Batterie" verwendet, wenn deren Gehäuse gemeint ist.

Die Erfindung geht von der Erkenntnis aus, dass es wünschenswert wäre, gleiche Batterien für Geräte mit unterschiedlichem Leistungsbedarf, insbesondere unterschiedlichem Spannungsbedarf verwenden zu können, indem die Batterien wahlweise in derjenigen Anzahl miteinander verbunden werden, die für den Leistungsbedarf des angeschlossenen Gerätes erforderlich ist. Speziell wäre ein Akku-Konzept erstrebenswert, das wahlweise für den Antrieb eines Rasenmähers, einer Heckenschere, eines Fadenschneiders oder anderer Bearbeitungsgeräte für den Garten einsetzbar ist, indem jeweils die gleichen Batterien eingesetzt werden, jedoch in unterschiedlicher Anzahl und gegebenenfalls auch in unterschiedlicher Schaltung entsprechend dem Leistungsbedarf des jeweiligen Gerätes.

Lösbare Verbindungen zwischen aufeinander folgenden gleichartigen Batterien sind bereits in unterschiedlicher Ausgestaltung bekannt. So zeigt die DE 10 2005 042 169 Batterien, deren einer Pol als Vorsprung und deren anderer Pol als dazu passende Vertiefung ausgebildet ist, so dass mehrere Batterien in Form von Steckverbindungen des Pluspoles mit dem Minuspol der Folgebatterie hintereinander zusammengesteckt werden können. Allerdings ist eine solche Klemmverbindung zwischen aufeinander folgenden Batterien relativ instabil. Zur sicheren Halterung bedürfen die Batterien einer zusätzlichen Halterung oder eines sie umgebenden Gehäuses.

Das gleiche gilt für die EP 553 093, von der der Oberbegriff des Patentanspruches 1 ausgeht. Dort sind die Batterien mit zumindest vier Anschlusspolen bestückt und werden über ihre zylindrischen oder kegelförmigen Pole miteinander verbunden.

Des Weiteren ist durch die DE 298 24 609 ein Batteriepaket bekannt geworden, bei dem zwei Batteriegehäuse durch zwei parallele Gelenkarme schwenkbar miteinander verbunden sind.

Außerdem ist durch die JP 11073939 die Verbindung von zwei Flachbatterien über eine Schwenklagerung bekannt und schließlich ist durch die DE 101 22 682 eine Zellenmodulstruktur bekannt, bei der der Anschluss einzelner Zellen durch eine Schraubverbindung erfolgt.

Schließlich ist durch die DE 494 929 auch eine formschlüssige Verbindung benachbarter Batterien bekannt. Dabei erfolgt die Verbindung über einen Bajonettverschluss oder ein Schraubgewinde. Man erhält dadurch eine relativ stabile Verbindung, jedoch beschränkt auf jeweils einen Pol der zu verbindenden Batterien.

Ausgehend von dem vorbekannten Stand der Technik liegt der vorliegenden Erfindung die Aufgabe zugrunde, eine Batterie zu entwickeln, die für ein universelles Akku-Konzept geeignet ist und mit gleichartigen Batterien je nach dem Leistungsbedarf des anzuschließenden elektrischen Gerätes zusammenzuschalten ist. Dabei soll die Verbindung benachbarter Batterien eine wesentlich bessere Handhabung als bei den bekannten Konstruktionen gestatten und trotz hoher Stabilität und Kontaktsicherheit ein schnelles und einfaches Lösen der Verbindung gestatten. Nicht zuletzt soll sich die Erfindung durch zuverlässigen und kostengünstigen Aufbau auszeichnen.

Diese Aufgabe wird erfindungsgemäß durch die Merkmale des Patentanspruches 1 gelöst.

Durch das erfindungsgemäße Schwenklager werden die Batterien über einen großen Schwenkwinkel formschlüssig aneinander gehalten. Sie sind also ähnlich wie Kettenglieder beweglich aneinander zu reihen und können vom Benutzer beispielsweise als Gürtelteil oder dergleichen getragen werden. Zum Lösen der Batterien aus dem Schwenklager brauchen sie lediglich in einen außerhalb der normalen Anwendung liegenden Winkelbereich verschwenkt werden, wo sie dann ohne zusätzliche Werkzeuge aus dem Schwenklager herausgezogen, also vereinzelt werden können. Dabei besteht das Schwenklagersaus zwei miteinander korrespondierenden Lagerelementen, von denen das eine Lagerelement an der einen Batterie, das andere, dazu komplementäre Lagerelement an der anderen Batterie angeordnet ist. Beide Lagerelemente sind vorzugsweise einstückig an ihren jeweiligen Batterien angeordnet. Da jede Batterie an beiden Enden mit jeweils einer folgenden Batterie verbunden werden soll, hat jede Batterie also am einen Ende ein Lagerelement und am anderen Ende ein dazu komplementäres Lagerelement.

Zweckmäßig beträgt der Schwenkbereich, wo die Batterien im Schwenklager gehalten werden, jeweils etwa 80° in beiden Schwenkrichtungen, wenn man von zwei gradlinig aufeinander folgenden Batterien ausgeht. Hingegen wird die Schwenkposition, die ein Lösen der Batterien aus dem Schwenklager gestattet, erst bei einer stärkeren Verschwenkung, also beispielsweise erst bei einem Schwenkwinkel von etwa 90° erreicht. Ein unbeabsichtigtes Lösen der Batterien aus dem Schwenklager ist dadurch praktisch ausgeschlossen.

Ergänzend ist es auch möglich, vor Erreichen des Schwenkwinkels zum Lösen der Batterien den Drehwiderstand im Schwenklager lokal zu erhöhen, etwa durch Rastfedern oder dergleichen.

Eine besonders zweckmäßige Weiterbildung der Erfindung besteht darin, dass die Anschlusspole direkt in das zumindest eine Schwenklager integriert sind, etwa indem einige der Anschlusspole als Teilringe ausgebildet sind, die mit unterschiedlichem Radius konzentrisch zur Schwenklager-Achse verlaufen. Dadurch sind mehrpolige Verbindungen innerhalb des gleichen Schwenklagers möglich. Die Batterien können somit nicht nur hintereinander, sondern auch parallel geschaltet werden und ggf. können noch Anschlusspole für eine zusätzliche Steuerleitung oder dergleichen zur Verfügung gestellt werden.

Vorstehend wurde davon ausgegangen, dass die Verbindung benachbarter Batterien jeweils nur über ein Schwenklager erfolgt. Für eine besonders stabile Schwenkverbindung wie auch für eine hohe Kontaktsicherheit ist es jedoch besonders günstig, wenn die Verbindung benachbarter Batterien über zwei Schwenklager erfolgt, die voneinander distanziert auf einer gemeinsamen imaginären Schwenkachse angeordnet sind. In diesem Fall hat jede Batterie nahe ihrem einen Ende zwei koaxiale Lagerelemente und nahe ihrem anderen Ende zwei koaxiale komplementäre Lagerelemente. Diese Aufteilung des Schwenklagers in zwei koaxiale, voneinander beabstandete Schwenklager erlaubt eine wesentlich bessere Kraftaufnahme und verbessert demgemäß die Stabilität der Verbindung benachbarter Batterien.

Zur Sicherung einer zuverlässigen Stromübertragung zwischen benachbarten Batterien ist es vorteilhaft, wenn in jedes Lagerelement zumindest zwei Anschlusspole integriert sind. Diese Anschlusspole sind zweckmäßig mit unterschiedlichem Radius zur Schwenkachse positioniert. Es spielt dadurch keine Rolle, wenn benachbarte Batterien seitenverkehrt miteinander verbunden werden. Außerdem erhöht sich die Kontaktfläche zur Stromübertragung.

Besonders günstig ist es, wenn jedes Lagerelement außerdem zumindest noch einen weiteren Anschluss für eine Steuerleitung aufweist. Diese Steuerleitung kann dazu verwendet werden, die Sollspannung und/oder die Sollstromstärke des angeschlossenen elektrischen Gerätes abzugreifen und an eine in der Batterie integrierte elektronische Schaltung weiterzugeben. Für die Erkennung der Sollspannung des angeschlossenen elektrischen Gerätes empfiehlt es sich, die elektrischen Geräte, die zum Anschluss an die erfindungsgemäßen Batterien vorgesehen sind, mit einem Speicher-Baustein zu bestücken, der die Sollspannung und/oder die erforderliche Stromstärke des elektrischen Gerätes an die genannte elektronische Schaltung überträgt. Diese elektronische Schaltung sorgt dann dafür, dass die miteinander verbundenen Batterien in der richtigen Weise zusammengeschaltet, also parallel und/oder hintereinander geschaltet werden und dass insbesondere keine zu hohe Versorgungsspannung und/oder Versorgungsstromstärke erzeugt wird, die oberhalb der Sollspannung des angeschlossenen elektrischen Gerätes liegt.

Außerdem kann in die elektronische Schaltung ein Schutzschalter gegen Überspannung und/oder gegen Überstrom eingebaut sein. Dadurch wird vor allem das angeschlossene elektrische Gerät geschützt, gleichzeitig aber auch die Batterie, die sich beispielsweise bei einem zu hohen Entladestrom unerwünscht aufheizen könnte.

Darüber hinaus kann die elektronische Schaltung dazu verwendet werden, den Ladezustand der Batterie anzuzeigen.

In diesem Zusammenhang kann es auch zweckmäßig sein, dass die elektronische Schaltung Signalelemente zur Anzeige einer eventuellen Über- und/oder Unterspannung der miteinander verbundenen Batterien gegenüber dem Soll-Strombedarf des angeschlossenen Gerätes aufweist. Dadurch wird der Benutzer ggf. darauf hingewiesen, beispielsweise weitere Batterien anzuschließen oder eine Batterie aus der Schwenkverbindung zu entnehmen.

Alternativ liegt es auch im Rahmen der Erfindung, die elektronische Schaltung für die Erkennung der Sollspannung des angeschlossenen elektrischen Gerätes wie auch zur Anpassung der von mehreren miteinander verbundenen Batterien bereit gestellten Spannung an die Sollspannung nicht an den Batterien, sondern an dem elektrischen Gerät unterzubringen. Falls die elektronische Schaltung für unterschiedliche elektrische Geräte, etwa für einen Fadenschneider mit niedrigem Spannungsbedarf oder einem Rasenmäher mit hohem Spannungsbedarf eingesetzt werden soll, empfiehlt es sich, dass sie eine eigene Spannungserkennung besitzt und dadurch die Sollspannung des Gerätes erfasst und den passenden Spannungskanal, sei es beispielsweise 24 V, sei es 36 V oder 48 V auswählt. Dabei braucht die Spannungserkennung und die Auswahl des passenden Spannungskanals nur beim ersten Verbinden der elektronischen Schaltung mit dem Gerät durchgeführt werden. Danach kann der Spannungskanal gespeichert und beibehalten werden, bis die elektronische Schaltung an ein anderes Gerät mit gegebenenfalls anderem Leistungsbedarf angeschlossen wird; erst dann folgt eine neue Erkennungs- und Anpassungsphase. Selbstverständlich kann die elektronische Schaltung aber auch bereits herstellerseitig auf den Sollwert des elektrischen Gerätes eingestellt werden. In beiden Fällen wird die erkannte oder vorgegebene Sollspannung dazu benutzt, die von den miteinander verbundenen Batterien zur Verfügung gestellte Spannung an die Sollspannung anzupassen.

Selbstverständlich kann die elektronische Schaltung auch in diesem Fall einen Schutzschalter gegen Überspannung und/oder gegen Überstrom enthalten, denn eine eventuelle Über- und/oder Unterspannung der miteinander verbundenen Batterien gegenüber dem Soll-Leistungsbedarf des angeschlossenen Gerätes anzeigen wie auch den Ladezustand der angeschlossenen Batterien anzeigen.

Des Weiteren bietet sich die vorteilhafte Möglichkeit, die anzuschließenden elektrischen Geräte je nach ihrem Leistungsbedarf mit mehreren Batterie-Anschlüssen zu bestücken. Diese Batterie-Anschlüsse sind zweckmäßig parallel geschaltet, so dass auf einfache Weise eine Verdoppelung oder Verdreifachung der Batteriespannung möglich wird.

Die Anpassung der Batterieleistung an die Betriebsdauer des gewünschten Gerätes bzw. dessen Leistungsbedarf kann dann durch Anschluss weiterer Batterien über die Schwenkverbindung realisiert werden, also durch eine Serienschaltung.

Die Batterie-Anschlüsse am Gerät können herkömmlich über Kabel erfolgen, zweckmäßig aber direkt über die beschriebenen Lagerelemente. Das heißt, dass die Batterien über ihre Lagerelemente mit komplementären Lagerelementen des Gerätes in einer bestimmten Winkellage zusammengesteckt und dann in ihre Betriebsstellung verschwenkt und in dieser Stellung gegebenenfalls verklemmt werden.

Weitere Merkmale und Vorteile der Erfindung ergeben sich aus der nachfolgenden Beschreibung von Ausführungsbeispielen und aus der Zeichnung; dabei zeigt
- Figur 1 a, 1 b: eine Batterie in 2 Schrägansichten;
- Figur 2 - 5: zwei gleichartige Batterien, wie sie in das Schwenklager eingesteckt werden;
- Figur 6a, 6b: mehrere zusammengesteckte Batterien;
- Figur 7a, 7b: vergrößerte Darstellung der Schwenklager an den beiden Batterie-Enden;
- Figur 8: einen Querschnitt durch die Batterie;
- Figur 9: einen Längsschnitt durch die Batterie gemäß der Linie B-B in Figur 8;
- Figur 10: die gabelförmig außen liegenden Kontaktelemente gemäß einem Schnitt D-D in Figur 9;
- Figur 11: die dazu komplementären innen liegenden Kontaktelemente in den Bereichen I und J von Figur 9;
- Figur 12: eine geöffnete Batterie mit den darin eingebauten Zellen;
- Figur 13: eine geöffnete Batterie entsprechend Figur 12, jedoch mit anderer Anordnung der Zellen;
- Figur 14: ein Schaltschema für die Anpassung der Batterieleistung an den Leistungsbedarf des angeschlossenen Gerätes.

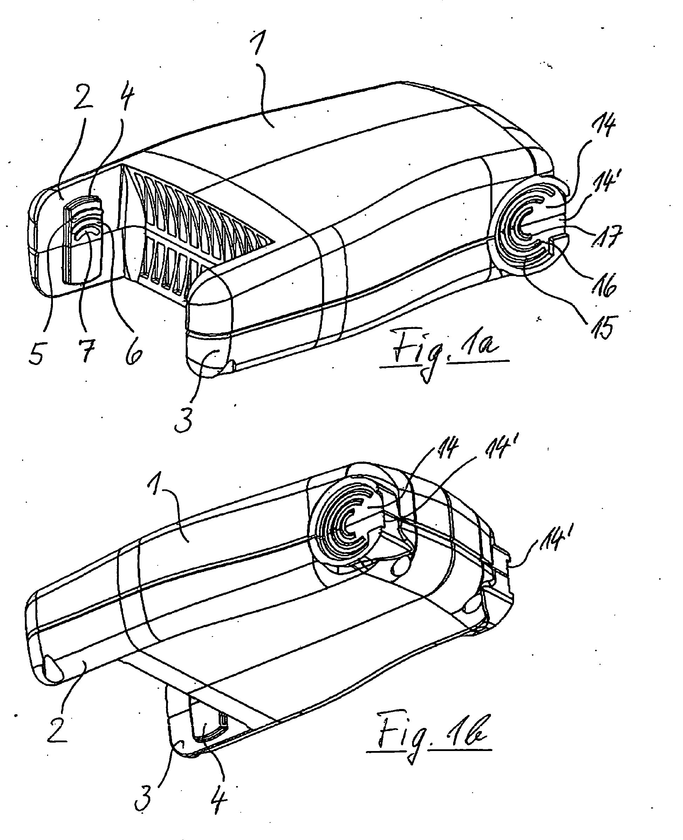

In Figur 1 erkennt man eine erfindungsgemäße Batterie 1, die an ihren beiden längsseitigen Enden für eine Schwenkverbindung mit gleichartigen Batterien ausgebildet ist. Dazu ist sie an ihrem in Figur 1 vorderen Ende etwa gabelförmig ausgebildet, nämlich mit zwei in Längsrichtung verlaufenden Vorsprüngen 2 und 3. Diese Vorsprünge tragen an ihren Innenseiten jeweils ein Lagerelement 4 in Form eines in Querrichtung vorspringenden Blockes. An der Innenseite des Lagerelementes 4 sind Anschlusspole angeordnet, und zwar in Form von drei Kreisabschnitten 5, 6 und 7, die konzentrisch zueinander angeordnet sind.

Am anderen Ende ist die Batterie etwas schmäler ausgebildet und trägt dort an beiden Seitenwänden Lagerelemente 14 mit konzentrisch angeordneten kreisbogenförmigen Anschlusspolen 15, 16, 17. Wesentlich dabei ist, dass die Lagerelemente 14 mit den Anschlusspolen 15, 16, 17 komplementär zu den Lagerelementen 4 mit den Anschlusspolen 5, 6 und 7 ausgebildet und positioniert sind, so dass die Lagerelemente 4 in die Lagerelemente 14 einer benachbarten Batterie eingesteckt werden können, um ein gemeinsames Schwenklager zu bilden. Um dieses Einstecken zu ermöglichen, haben die Lagerelemente 14 einen in Radialrichtung nach außen offenen Schlitz 14', in welchen das Lagerelement 4 einsteckbar ist, wenn die beiden zu verbindenden Batterien im richtigen Winkel zueinander stehen.

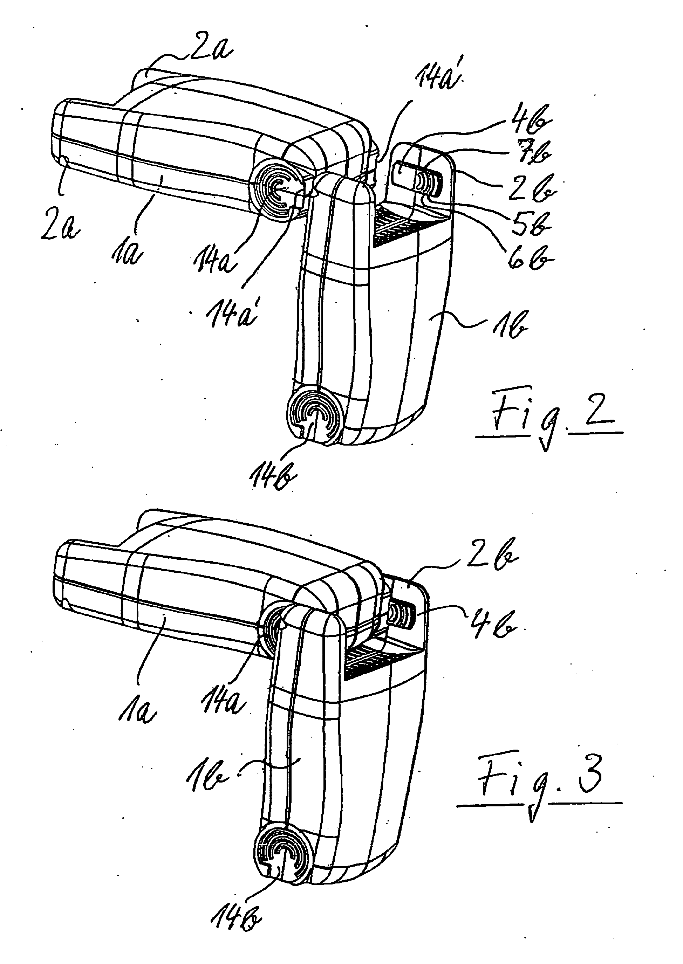

Dieses Zusammenstecken wird in den Figuren 2 bis 5 verdeutlicht. Man sieht dort zwei Batterien 1a und 1 b, die den gleichen Aufbau wie die in Figur 1 gezeigte Batterie eins haben. Für das Zusammenstecken der Gelenkelemente 4b und 14a werden die beiden Batterien in eine Winkelstellung von etwa 90° gebracht. In dieser Stellung können die an den gabelartigen Vorsprüngen 2b angebrachten Lagerelemente 4b in die dazu komplementären endständig offenen Längsschlitze 14a' der beiden Lagerelemente 14a eingesteckt werden.

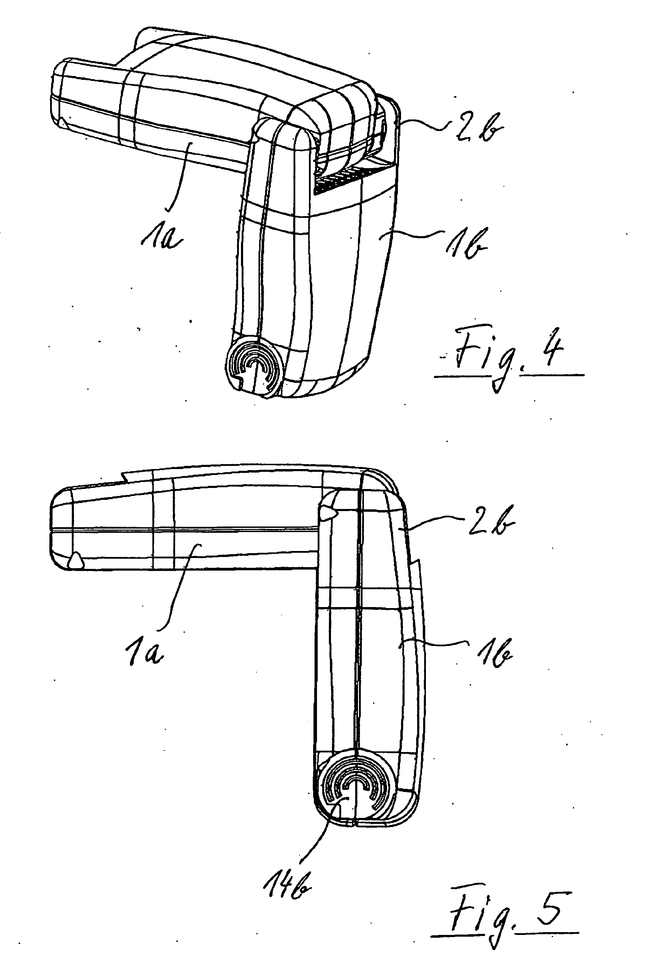

Figur 3 und 4 zeigt die beiden Batterien 1 a und 1 b bei teilweise vollzogener Einsteckbewegung. Dabei wird deutlich, dass die gabelförmigen Vorsprünge 2b der Batterie 1 b auf die Längsseiten der Batterie 1 a fluchtend aufgeschoben werden können, wobei die Lagerelemente 4b in die Längsschlitze 14a' der Batterie 1 a eintauchen. Diese Eintauchbewegung wird durch die Länge der blockartigen Lagerelemente 4b oder durch Anschläge so begrenzt, dass die Anschlusspole 5b, 6b, 7b koaxial zu den Anschlusspolen 15a, 16a, 17a der Batterie 1 a zu liegen kommen, jedoch radial so weit versetzt, dass die Anschlusspole 5b, 6b, 7b in die Zwischenräume zwischen den korrespondierenden Anschlusspolen 5a, 6a, 7a hineingeschwenkt werden können.

Erst dann, wenn die Batterie 1 b mit ihren Lagerelementen in die komplementären Lagerelemente der Batterie 1 a vollständig eingesteckt worden ist, wie in Figur 5 dargestellt, kann sie aus ihrer 90°-Abwinkelung herausgeschwenkt werden, wodurch die beiderseitigen Anschlusspole in formschlüssigen Eingriff miteinander gelangen. Beide Batterien sind dann über einen Schwenkbereich von nahezu 180° gelenkartig miteinander verbunden. Gleichzeitig ist eine elektrische Verbindung zwischen den drei Anschlusspolen der einen Batterie mit den drei Anschlusspolen der anderen Batterie hergestellt, wobei es sich genauer gesagt um zwei Verbindungen handelt, nämlich an beiden Längsseiten der Batterien. Dadurch wird die elektrische Kontaktsicherheit wesentlich verbessert, weil Redundanz vorliegt. Die Anschlusspole 5 bis 7 und 15 bis 17 sind in bekannter Weise mit den im Inneren der Batterie untergebrachten elektrochemischen Zellen verbunden.

Die Batterien lassen sich wieder separieren, wenn sie in die 90°-Abwinkelung zurückgeschwenkt werden.

Da die Batterien an beiden Längsenden Lagerelemente 4 und dazu komplementäre Lagerelemente 14 aufweisen, können beliebig viele Batterien in der beschriebenen Weise schwenkbar miteinander verbunden werden, so dass je nach Leistungsbedarf des zu betreibenden elektrischen Gerätes Batterien in passender Zahl aneinander gereiht werden können.

Insbesondere bei zwei oder mehr Batterien bietet sich die vorteilhafte Möglichkeit, dass sie in ein Gurtsystem integriert werden, das vom Benutzer beispielsweise als Hüft- oder Schultergurt getragen wird und von dem dann über eine flexible elektrische Anschlussleitung das elektrische Gerät mit Strom versorgt wird.

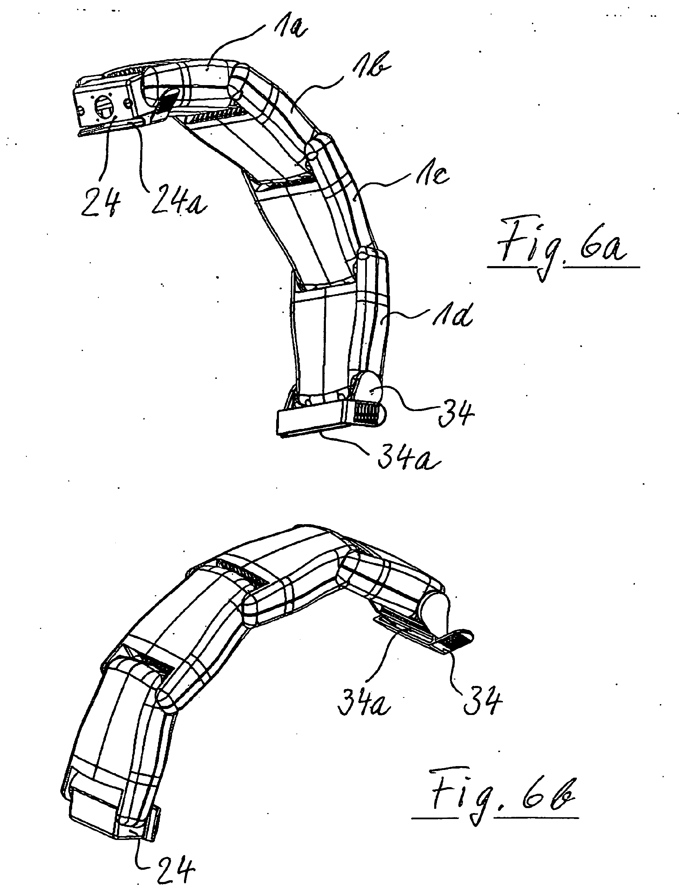

Figur 6a und 6b zeigt eine derartige Anwendung der Batterien an einem Gurt. Zu diesem Zweck sind in die Schwenklagerelemente 4 und 14 Endstücke 24 und 34 eingesetzt. Diese Endstücke haben an ihren beiden Stirnseiten ähnliche Lagerelemente wie die Batterien, so dass sie in gleicher Weise in die endständigen Schwenklager der Batterien eingesetzt werden können wie zuvor beschrieben. Alternativ könnten die Endstücke über Schnapp- oder Klemmverbindungen mit den Batterien verriegelt werden. Wesentlich ist, dass die Endstücke jeweils einen Schlitz aufweisen, durch welchen ein Gurt, sei es ein Gürtel oder Schultergurt, hindurchziehbar ist. In der Zeichnung erkennt man an dem einen Endstück 24 diesen durchgehenden Schlitz 24a.

In den Figuren 6a und 6b handelt es sich um eine Hintereinanderschaltung mehrerer Batterien. Zwar wäre es durch interne Schaltung auch möglich, eine Parallelschaltung herbeizuführen. Letzteres lässt sich aber in der Praxis dadurch leichter realisieren, dass man einen Träger, etwa als Gurt oder dergleichen vorsieht, der mehrere parallel geschaltete Batterie-Anschlüsse aufweist. Auf diese Batterie-Anschlüsse wird dann jeweils eine Batterie über ihr Schwenklager angeschlossen, so dass dadurch eine Verdopplung, Verdreifachung oder Vervierfachung der Batteriespannung möglich ist.

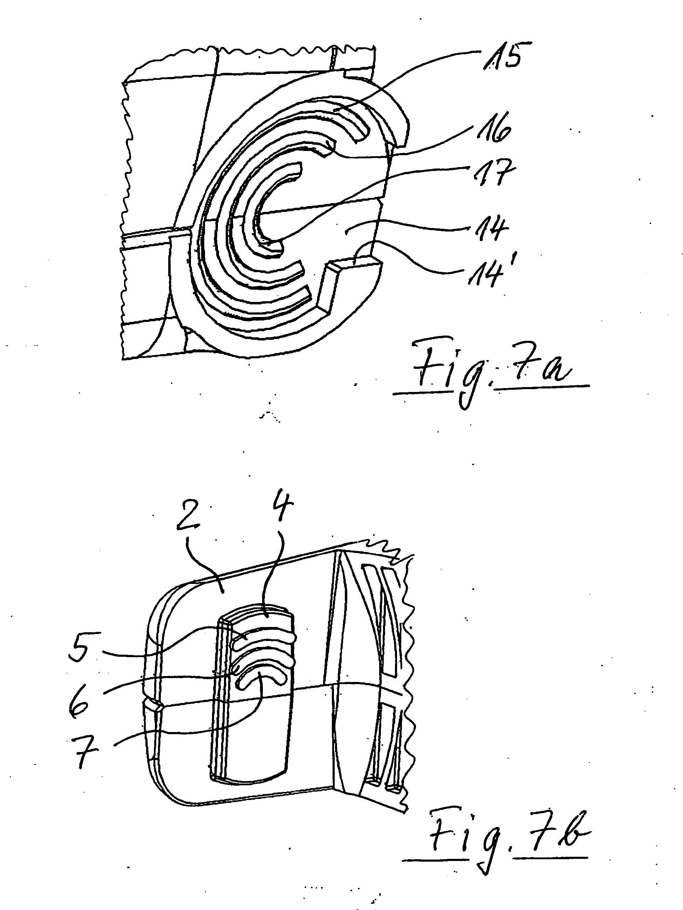

Die Figuren 7a und 7b zeigen vergrößerte Darstellungen der die Schwenkverbindung bildenden Lagerelemente 4 und 14 mit den jeweiligen Anschlusspolen 5 bis 7 bzw. 15 bis 17. Insbesondere kann man in Figur 7a den Schlitz 14a' erkennen, der das Einstecken des korrespondierenden Lagerelementes 4 gestattet, wenn die miteinander zu verbindenden Batterien unter einem Winkel von etwa 90° stehen.

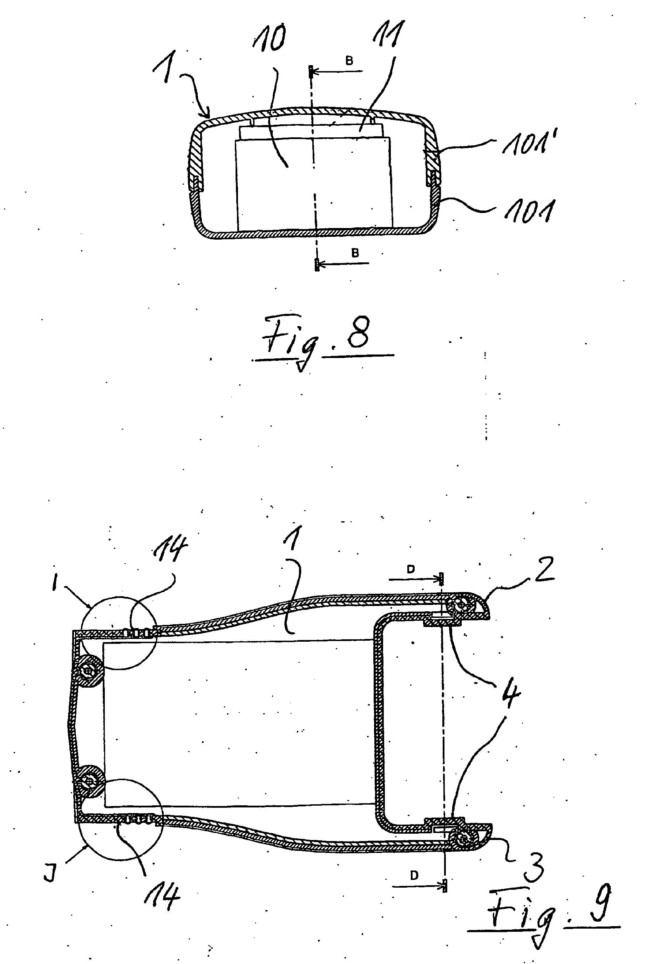

Die Figuren 8 und 9 zeigen Ansichten und Schnitte der Batterie 1. Dabei verdeutlicht der Schnitt in Figur 9 dass die Batterie an ihrem einen Ende gabelförmig und dadurch breiter ausgebildet ist, um dort die blockförmigen Lagerelemente 4 zu bilden. Demgegenüber ist die Batterie an ihrem anderen Ende schmäler ausgebildet, um dort die Lagerelemente 14 zu bilden, die komplementär zu den Lagerelementen 4 ausgebildet sind, so dass an beiden Enden jeder Batterie Schwenkverbindungen zum Anschluss einer Folgebatterie gebildet werden können.

Des Weiteren wird aus Figur 9 deutlich, dass die Lagerelemente 4 koaxial zueinander angeordnet sind, so dass sie eine imaginäre Schwenkachse bilden ― ebenso wie dies für die Lagerelemente 14 der Fall ist.

Der in Figur 8 dargestellte Querschnitt zeigt, dass die Batterie neben den wieder aufladbaren Akkumulatorzellen 10 eine elektronische Schaltung 11 aufweist. Mit dieser elektronischen Schaltung wird automatisch der Leistungsbedarf, insbesondere die Spannung des an die Batterie angeschiossenen elektrischen Gerätes ermittelt. Außerdem kann die elektronische Schaltung entsprechend dem erforderlichen Leistungsbedarf des angeschlossenen elektrischen Gerätes die miteinander verbundenen Batterien derart in Reihe und/oder parallel zusammenschalten, dass die von den Batterien zur Verfügung gestellte Spannung-und Stromstärke optimal zum Leistungsbedarf des angeschlossenen Gerätes passt.

Des Weiteren kann die elektronische Schaltung einen Schutzschalter gegen Überspannung und/oder Überstrom aufweisen und/oder eine optische oder akustische Anzeige auslösen, wenn die von den zusammengeschalteten Batterien angebotene Leistung nicht zum Leistungsbedarf des angeschlossenen Gerätes passt.

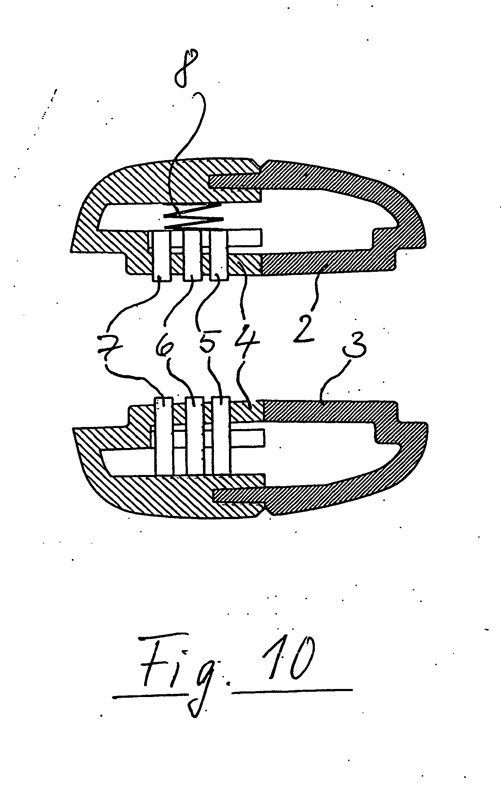

Figur 10 zeigt einen vergrößerten Schnitt durch die beiden Lagerelemente 4 am gabelförmigen Ende der Batterie. Man erkennt die beiden Vorsprünge 2 und 3, die an ihren einander zugewandten Seiten die beiden blockförmigen Lagerelemente 4 tragen und man erkennt die in den Lagerelementen 4 angeordneten Anschlusspole 5, 6 und 7. Die Anschlusspole verlaufen senkrecht zur Zeichnungsebene in Form konzentrischer Ringabschnitte wie in den Figuren 1 bis 3 dargestellt.

Im oberen Teil von Figur 10 sind die Anschlusspole in Querrichtung der Batterie verschiebbar gelagert und stehen unter der Wirkung einer Druckfeder 8. Sie stellt sicher, dass die Anschlusspole mit ihren freien Enden gegen die komplementären Anschlusspole der benachbarten Batterie gedrückt werden. Somit können die letzt genannten Anschlusspole starr in ihrem jeweiligen Lagerelement 14 befestigt sein.

Demgegenüber zeigt die untere Hälfte von Figur 10 den starren Einbau der Anschlusspole 5, 6 und 7. Diese Alternative kommt dann in Betracht, wenn die komplementären Anschlusspole im Lagerelement 14 ihrerseits unter einer den Kontakt gewährleistenden Anpresswirkung stehen oder wenn man den elektrischen Kontakt weniger über die endständigen Stirnflächen der Anschlusspole 5, 6 und 7, sondern vielmehr über deren Umfangsflächen herbeiführen will.

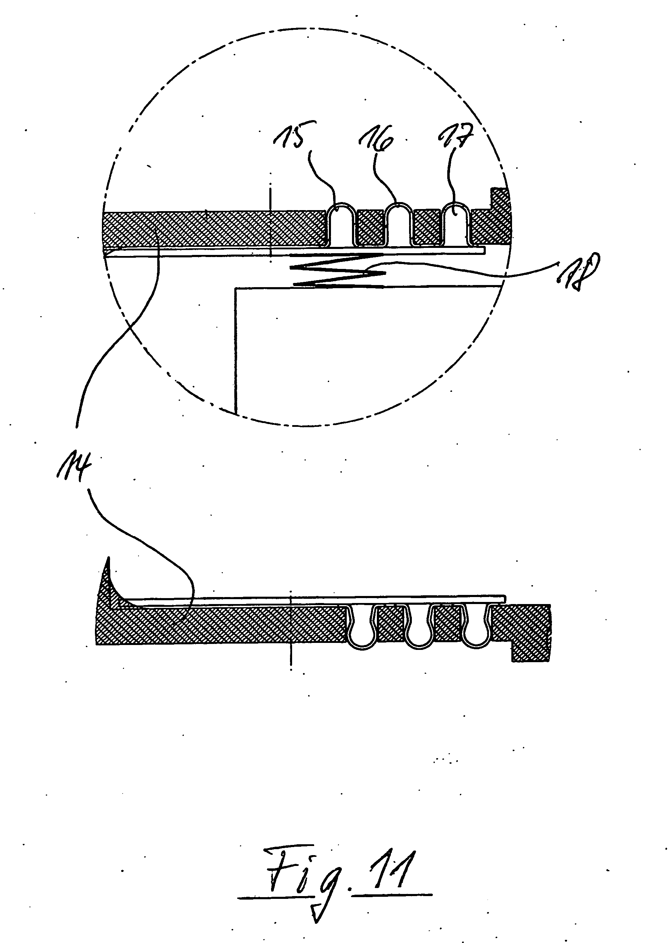

Die Figur 11 zeigt demgegenüber die Anschlusspole im Bereich der Lagerelemente 14. In der oberen Bildhälfte ist eine Alternative dargestellt, bei der die Anschlusspole 15, 16, 17 quer zum Batteriegehäuse verschiebbar gelagert und durch eine Druckfeder 18 nach außen belastet sind. Dadurch werden sie im Falle einer Verbindung mit einer benachbarten Batterie gegen deren komplementäre Anschlusspole 5, 6, 7 gepresst, so dass gute Kontaktverhältnisse gewährleistet sind.

In der unteren Hälfte von Figur 10 ist eine andere Alternative für die Ausbildung der Anschlusspole 15, 16 und 17 dargestellt. Dabei ist auf die Feder 18 verzichtet worden und stattdessen sind die Anschlusspole 15, 16 und 17 in sich elastisch ausgebildet, indem sie sie Abwinkelungen in ihren quer zum Batteriegehäuse verlaufenden Flanken aufweisen.

Wesentlich ist bei der Darstellung der Anschlusspole in den Figuren 10 und 11, dass die benachbarten Anschlusspole jeweils elektrisch voneinander isoliert sind, das heißt, dass zwar gegenüberliegende Anschlusspole 4 miteinander verbunden sind, wie auch die gegenüberliegenden Anschlusspole 5 und 6, dass jedoch zwischen den Anschlusspolen 5 und 6 keine elektrische Verbindung besteht, ebenso wenig zwischen den Anschlusspolen 6 und 7. Ebenso sind auch gegenüberliegende Anschlusspole 15 in den Lagerelementen 14 miteinander verbunden, so wie die gegenüberliegenden Anschlusspole 16 und die gegenüberliegenden Anschlusspole 17, wogegen keine Verbindung besteht zwischen den radial benachbarten Anschlusspolen 15, 16 und 17. Dadurch können beispielsweise die äußeren Anschlusspole 5 und 15 dem Pluspol der Batterie, die Anschlusspole 6 und 16 dem Minuspol der Batterie und die Anschlusspole 7 und 17 einer Steuerleitung zugeordnet werden.

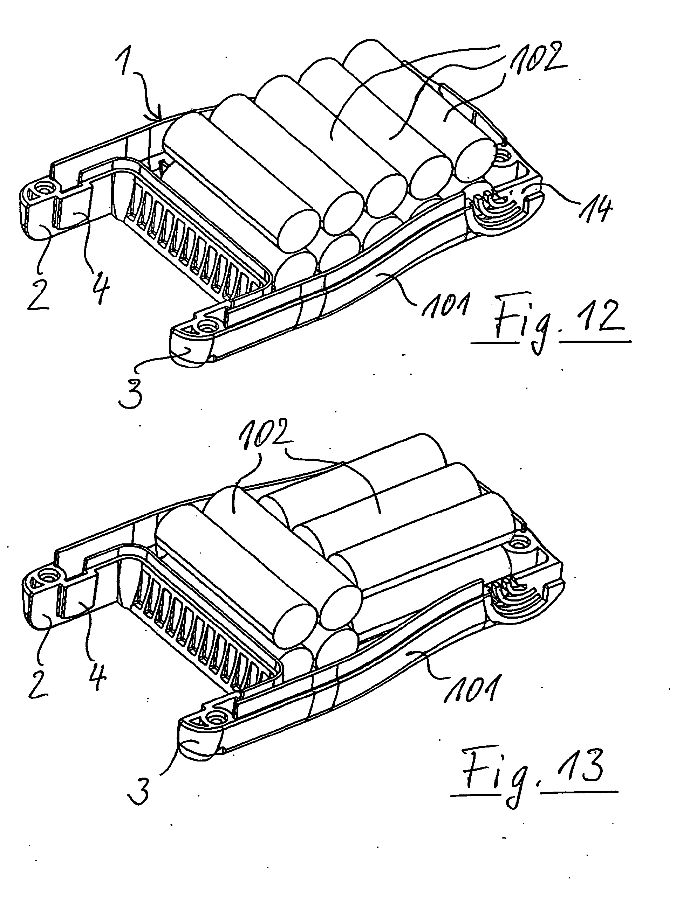

Die Figuren 12 und 13 zeigen die Batterie jeweils in geöffnetem Zustand. Man erkennt, dass die Batterie 1 im vorliegenden Ausführungsbeispiel ein eigenständiges Gehäuse aufweist. Es besteht aus zwei komplementären Gehäusehälften 101 und 101', die in ihrem Innenraum eine Vielzahl elektrochemischer Elemente in Form zylindrischer Zellen 102 aufnehmen. Bei diesen Zellen handelt es sich aus Kostengründen um handelsübliche, wiederaufladbare Akkus, die in an sich bekannter Weise elektrisch miteinander verbunden und letztlich an die positiven bzw. negativen Anschlusspole im Batteriegehäuse angeschlossen sind.

Während die Zellen in Figur 12 quer zur Batterielängsrichtung nebeneinander und übereinander gestapelt sind, liegen die Zellen in Figur 13 teilweise auch in Längsrichtung des Batteriegehäuses, um das Gehäusevolumen besser auszunutzen.

Die miteinander komplementären Gehäusehälften 101 und 101' (siehe auch Figur 8) sind durch Teilung der Batterie in ihrer Längsebene gebildet und haben an ihrem Umfang zueinander korrespondierende Vorsprünge und Rücksprünge, so dass beide Gehäusehälften passend zusammengesteckt und sodann fest miteinander verbunden werden können. Dabei wird durch entsprechende elektrische Kontaktflächen, die beim Verbinden der beiden Gehäusehälften miteinander in Anlage kommen, dafür gesorgt, dass die Anschlusspole in beiden Gehäusehälften an die elektrischen Zellen angeschlossen sind.

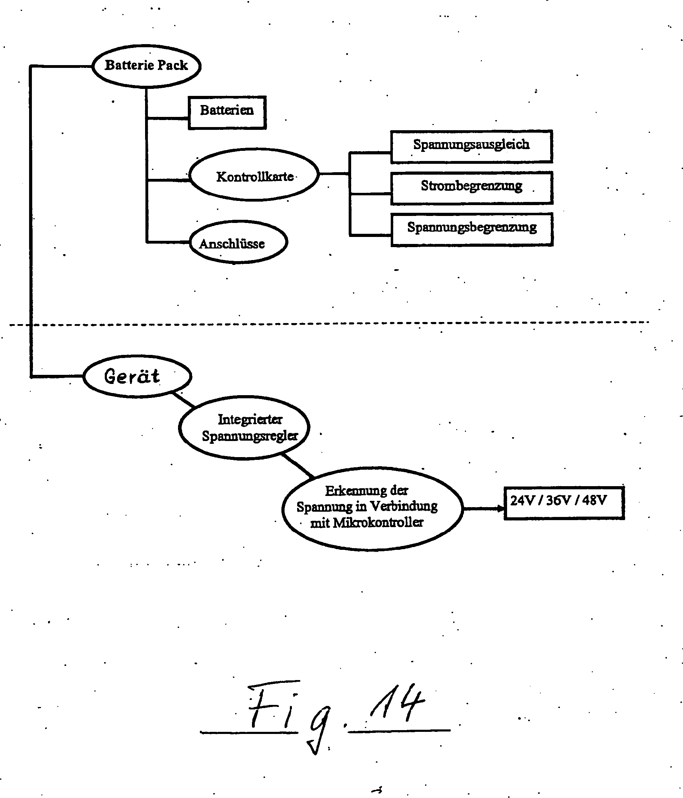

Figur 14 zeigt im oberen Teil schematisch die elektrische Verknüpfung der Batterien mit den zugehörigen elektronischen Bauteilen. Wesentlich dabei ist, dass eine so genannte Kontrollkarte die Sollspannung, ggf. auch die Sollstromstärke, des angeschlossenen elektrischen Gerätes empfängt und dementsprechend die Strombegrenzung und die Spannungsbegrenzung ansteuert. Außerdem ist die Kontrollkarte noch mit einem elektronischen Baustein zum Spannungsausgleich verbunden, der dafür sorgt, dass die Spannung zwischen den einzelnen Zellen ausgeglichen wird.

Im unteren Teil von Figur 14 sieht man das angeschlossene elektrische Gerät. Es enthält einen integrierten oder lösbar anschließbaren elektronischen Baustein, der die Sollspannung des Gerätes erkennt und den Spannungswert an die oben genannte Kontrollkarte der miteinander verbundenen Batterien einerseits weitergibt, andererseits aber auch an einen nachgeschalteten Mikrocontroler, der einen bestimmten Spannungskanal in der Stromversorgung des elektrischen Gerätes freischaltet, nämlich beispielsweise für 24 V oder 36 V oder 48 V.

Zusammenfassend bietet die erfindungsgemäße Batterie also den Vorteil, dass sie mittels einer Schwenkverbindung formschlüssig an ihren beiden Enden mit mehreren gleichartigen Batterien zusammengeschaltet werden kann, um die gewünschte Antriebsleistung bereitzustellen, dass die Batterien einen erhebiichen Freiraum hinsichtlich ihres Schwenkbereiches aufweisen ohne dabei ihre elektrische Verbindung zu gefährden und dass nicht zuletzt durch eine elektronische Schaltung eine Spannungserkennung des angeschlossenen elektrischen Verbrauchers und eine daraus abgeleitete automatische oder manuelle Zusammenschaltung der Batterien möglich ist, um sie optimal an den Leistungsbedarf des angeschlossenen Verbrauchers anzupassen.

## Patentansprüche

1. Batterie (1, 1a, 1b), die zur Versorgung elektrischer Geräte unterschiedlichen Leistungsbedarfes mit mehreren gleichartigen Batterien (1, 1a, 1b) lösbar verbindbar ist, wobei die Batterie zumindest vier Anschlusspole (5, 6; 15, 16) aufweist, von denen jeweils zwei Anschlusspole (5, 6) mit zwei entsprechend positionierten komplementären Anschlusspolen (15, 16) einer benachbarten gleichartigen Batterie korrespondieren,
**dadurch gekennzeichnet,**
**dass** die lösbare Verbindung benachbarter Batterien über zumindest ein Schwenklager (4/14) erfolgt, das in zumindest einer bestimmten Schwenkposition der Batterien (1 a, 1 b) relativ zueinander deren Einstecken in bzw. deren Lösen aus dem Schwenklager (4/14) gestattet, wogegen im übrigen Schwenkbereich die Batterien in dem Schwenklager (4/14) gehalten sind und
**dass** das Schwenklager (4, 5) aus zwei miteinander korrespondierenden Lagerelementen (4/14) besteht, von denen das eine Lagerelement (14a) an der einen Batterie (1a), das andere, dazu komplementäre Lagerelement (4b) an der anderen Batterie (1b) angeordnet ist.

2. Batterie nach Anspruch 1,
**dadurch gekennzeichnet,**
**dass** benachbarte Batterien (1a, 1 b) in das Schwenklager einsteckbar bzw daraus lösbar sind, wenn der Winkel zwischen diesen Batterien < 140°, insbesondere < 120°, vorzugsweise < 100° ist.

3. Batterie nach Anspruch 1,
**dadurch gekennzeichnet,**
**dass** die Anschlusspole (5, 6/15, 16) in das zumindest eine Schwenklager (4/14) integriert sind.

4. Batterie nach Anspruch 1,
**dadurch gekennzeichnet,**
**dass** zumindest einige der Anschlusspole (5, 6, 15, 16) als Teilringe ausgebildet sind, die mit unterschiedlichem Radius konzentrisch zur Schwenklager-Achse verlaufen.

5. Batterie nach Anspruch 1,
**dadurch gekennzeichnet,**
**dass** die Verbindung benachbarter Batterien (1 a, 1 b) über zwei Schwenklager (4/14) erfolgt, die voneinander distanziert auf einer gemeinsamen imaginären Schwenkachse angeordnet sind.

6. Batterie nach Anspruch 1,
**dadurch gekennzeichnet,**
**dass** jede Batterie nahe ihrem einen Ende zwei koaxiale Lagerelemente (4) und nahe ihrem anderen Ende zwei koaxiale komplementäre Lagerelemente (14) aufweist.

7. Batterie nach Anspruch 6,
**dadurch gekennzeichnet,**
**dass** in jedem Lagerelement (4, 14) zumindest zwei Anschlusspole (5, 6) bzw. (15, 16) integriert sind, insbesondere dass in jedem Lagefelement (4, 14) ein zumindest weiterer Anschluss (7, 17) für zumindest eine Steuerleitung integriert ist.

8. Batterie nach Anspruch 1,
**dadurch gekennzeichnet,**
**dass** die Lagerelemente (4, 14) zur Aufnahme von Endstücken (24, 34) geeignet sind, um mehrere miteinander verbundene Batterien (1) an einem Gurt- oder Rucksacksystem anzubringen.

9. Batterie nach einem der vorherigen Ansprüche,
**dadurch gekennzeichnet,**
**dass** zumindest eine der lösbar verbindbares Batterien eine elektronische Schaltung (11) zur Erkennung der Sollleistung des angeschlossenen elektrischen Gerätes aufweist.

10. Batterie nach Anspruch 9,
**dadurch gekennzeichnet,**
**dass** die elektronische Schaltung (11) die miteinander verbundenen Batterien passend zur Sollleistung des angeschlossenen elektrischen Gerätes in Reihe und/oder parallel zusammenschaltet.

11. Batterie nach Anspruch 9,
**dadurch gekennzeichnet,**
**dass** die elektronische Schaltung (11) Signalelemente zur Anzeige eines unpassenden Leistungsangebotes, insbesondere einer eventuellen Über- und/oder Unterspannung der miteinander verbundenen Batterien gegenüber dem Leistungsbedarf des angeschlossenen Gerätes aufweist.

12. Batterie nach Anspruch 1,
**dadurch gekennzeichnet,**
**dass** sie ein eigenständiges Gehäuse (101, 101') aufweist, an welchem das Schwenklager (4, 14) angeordnet ist.

## Claims

1. Battery (1, 1a, 1b) which is detachably connectible to a plurality of similar batteries (1, 1 a, 1b) in order to supply electrical devices having different power requirements, the battery having at least four terminals (5, 6; 15, 16) of which two terminals (5, 6) are complementary to two correspondingly positioned complementary terminals (15, 16) of an adjacent similar battery,
**characterised in that**
the detachable connection of adjacent batteries is effected by means of at least one pivot bearing (4/14) which, in at least one specific pivoted position of the batteries (1 a, 1b) relative to one another, allows the batteries to be inserted into the pivot bearing (4/14) and detached therefrom, whereas in the remainder of the pivot range the batteries are held in the pivot bearing (4/14), and the pivot bearing (4, 5) consists of two mutually complementary bearing elements (4/14) of which one bearing element (14a) is arranged on one battery (1 a) and the other bearing element (4b), which is complementary thereto, is arranged on the other battery (1b).

2. Battery according to claim 1,
**characterised in that**
adjacent batteries (1a, 1b) are insertable into the pivot bearing and detachable therefrom when the angle between those batteries is < 140°, especially < 120°, preferably < 100°.

3. Battery according to claim 1,
**characterised in that**
the terminals (5, 6/15, 16) are integrated in the at least one pivot bearing (4/14).

4. Battery according to claim 1,
**characterised in that**
at least some of the terminals (5, 6, 15, 16) are in the form of ring segments of different radii extending concentrically with respect to the pivot bearing axis.

5. Battery according to claim 1,
**characterised in that**
the connection of adjacent batteries (1a, 1b) is effected by means of two pivot bearings (4/14) which are arranged spaced apart from one another on a common notional pivot axis.

6. Battery according to claim 1,
**characterised in that**
each battery has, close to one end, two coaxial bearing elements (4) and, close to its other end, two coaxial complementary bearing elements (14).

7. Battery according to claim 6,
**characterised in that**
at least two terminals (5, 6), (15, 16) are integrated in each bearing element (4, 14), more especially at least one further connection (7, 17) for at least one control line is integrated in each bearing element (4, 14).

8. Battery according to claim 1,
**characterised in that**
the bearing elements (4, 14) are able to receive end pieces (24, 34) in order to attach a plurality of interconnected batteries (1) to a belt system or rucksack system.

9. Battery according to any one of the preceding claims,
**characterised in that**
at least one of the detachably connectible batteries has an electronic circuit (11) for identifying the nominal power requirement of the attached electrical device.

10. Battery according to claim 9,
**characterised in that**
the electronic circuit (11) connects the interconnected batteries in series and/or in parallel as suitable for the nominal power requirement of the attached electrical device.

11. Battery according to claim 9,
**characterised in that**
the electronic circuit (11) has signal elements for indicating an unsuitable output, especially a possible overvoltage and/or undervoltage of the interconnected batteries relative to the power requirement of the attached device.

12. Battery according to claim 1,
**characterised in that**
it has a separate housing (101, 101') on which the pivot bearing (4, 14) is arranged.

## Revendications

1. Batterie (1, 1a, 1b) qui peut être reliée de manière détachable à plusieurs batteries (1, 1a, 1b) du même type pour alimenter des appareils électriques ayant des besoins de puissance différents, la batterie présentant au moins quatre pôles de raccordement (5, 6 ; 15, 16), dont chaque fois deux pôles de raccordement (5, 6) correspondent à deux pôles de raccordement complémentaires (15, 16) positionnés en conséquence d'une batterie adjacente du même type,
**caractérisée en ce**
**que** la liaison détachable de batteries adjacentes est réalisée au moyen d'au moins un palier de pivotement (4/14) qui, dans au moins une position de pivotement définie des batteries (1a, 1 b) l'une par rapport à l'autre, permet leur enfichage dans le palier de pivotement (4/14) ou leur détachement de celui-ci, tandis que dans le reste de la plage de pivotement les batteries sont tenues dans le palier de pivotement (4/14) et
**que** le palier de pivotement (4, 5) est composé de deux éléments de palier (4/14) correspondants l'un à l'autre, dont un élément de palier (14a) est disposé sur une batterie (1a) et l'autre élément de palier (4b), complémentaire à celui-ci, sur l'autre batterie (1b).

2. Batterie selon la revendication 1,
**caractérisée en ce**
**que** des batteries adjacentes (1a, 1b) sont enfichables dans le palier de pivotement ou détachables de celui-ci lorsque l'angle entre ces batteries est < 140°, en particulier < 120°, de préférence < 100°.

3. Batterie selon la revendication 1,
**caractérisée en ce**
**que** les pôles de raccordement (5, 6/15, 16) sont intégrés dans ledit au moins un palier de pivotement (4/14).

4. Batterie selon la revendication 1,
**caractérisée en ce**
**qu'**au moins certains des pôles de raccordement (5, 6, 15, 16) sont réalisés sous la forme d'anneaux partiels de rayons différents qui s'étendent concentriquement à l'axe du palier de pivotement.

5. Batterie selon la revendication 1,
**caractérisée en ce**
**que** la liaison de batteries adjacentes (1a, 1b) est réalisée au moyen de deux paliers de pivotement (4/14) qui sont disposés à distance l'un de l'autre sur un axe de pivotement commun imaginaire.

6. Batterie selon la revendication 1,
caractérisée en ce
chaque batterie présente deux éléments de palier coaxiaux (4) près d'une de ses extrémités et deux éléments de palier coaxiaux complémentaires (14) près de son autre extrémité.

7. Batterie selon la revendication 7,
**caractérisée en ce**
**qu'**au moins deux pôles de raccordement (5, 6) ou (15, 16) sont intégrés dans chaque élément de palier (4, 14), en particulier qu'au moins un autre raccordement (7, 17) pour au moins une ligne de commande est intégré dans chaque élément de palier (4, 14).

8. Batterie selon la revendication 1,
**caractérisée en ce**
**que** les éléments de palier (4, 14) sont aptes à recevoir des pièces d'extrémité (24, 34) pour installer plusieurs batteries (1) reliées entre elles sur un système de ceinture ou de sac à dos.

9. Batterie selon une des revendications précédentes,
**caractérisée en ce**
**qu'**au moins une des batteries pouvant être reliées de manière détachable présente un circuit électronique (11) pour détecter la puissance nominale de l'appareil électrique raccordé.

10. Batterie selon la revendication 9,
**caractérisée en ce**
**que** le circuit électronique (11) interconnecte en série et/ou en parallèle les batteries reliées entre elles en fonction de la puissance nominale de l'appareil électrique raccordé.

11. Batterie selon la revendication 9,
**caractérisée en ce**
**que** le circuit électronique (11) présente des éléments de signalisation pour afficher une offre de puissance inappropriée, en particulier une éventuelle sur- et/ou sous-tension des batteries reliées entre elles par rapport au besoin de puissance de l'appareil raccordé.

12. Batterie selon la revendication 1,
**caractérisée en ce**
**qu'**elle présente un boîtier autonome (101, 101') sur lequel le palier de pivotement (4, 14) est disposé.
